# EUROPEAN PATENT SPECIFICATION

(11) **EP 2 041 225 B1**
(45) Date of publication and mention of the grant of the patent: **16.09.2015**
(21) Application number: 07786960.0
(22) Date of filing: 29.06.2007
(51) Int. Cl.: C08L 81/06

(54) **POLYMER COMPOSITION SUITABLE FOR ELECTROSTATIC DISCHARGE APPLICATIONS**
POLYMERZUSAMMENSETZUNG, DIE FÜR ANWENDUNGEN MIT ELEKTROSTATISCHER ENTLADUNG GEEIGNET IST
COMPOSITION POLYMÈRE CONVENANT À DES APPLICATIONS DE DÉCHARGE ÉLECTROSTATIQUE

(30) Priority: 07.07.2006 US 818959 P; 12.07.2006 US 830106 P; 04.08.2006 US 835430 P
(43) Date of publication of application: 01.04.2009
(73) Proprietor: Solvay Specialty Polymers USA, LLC., Alpharetta, GA 30005 (US)
(72) Inventor: STERN, Brian A., Duluth, GA 30097 (US); EL-HIBRI, Mohammad Jamal, Atlanta, GA 30328 (US); IRELAND, Daniel J., Kernersville, NC 27284 (US)
(74) Representative: Vande Gucht, Anne
(86) International application number: PCT/EP2007/056603
(87) International publication number: WO 2008/003659

(56) References cited:
- EP-A1- 0 430 247
- WO-A-2005/034145
- US-A- 6 150 446
- DATABASE WPI Week 199545 Derwent Publications Ltd., London, GB; AN 1995-348439 XP002449125 & JP 07 238216 A (PLUS TECH K K) 12 September 1995 (1995-09-12)

## Description

### FIELD OF THE INVENTION

The present invention relates to a new polymer composition suitable for electrostatic discharge applications, and to articles and part of articles made thereof.

### BACKGROUND OF THE INVENTION

Certain prior art conductive thermoplastic polymer compositions are known to be more or less reliable and valuable in applications that require protection from electrostatic discharge (ESD). These specialty polymer compositions are generally tailored to span the surface resistivity spectrum, and can often be formulated for injection molding or extrusion processes.

Multiple technologies are available to impart conductive properties into thermoplastic resins that are otherwise insulative in nature, providing the exact degree of conductivity required for ESD protection. Among others, a conductive filler can be added to the thermoplastic polymer.

Conductive thermoplastic polymer compositions have a number of advantages over metals or surfactant coatings. Finished parts are lighter in weight, easier to handle, and less costly to ship. Their fabrication is usually easier and less expensive due to the elimination of secondary processes, and they are less subject to denting, chipping and scratching.

Among other thermoplastic polymers, poly(biphenyl ether sulfone)s, in particular polyphenylsulfones (PPSU), are materials of choice notably for the ultimate in toughness and impact resistance (with ductile failures). Besides, they have a high glass transition temperature and a rather good stiffness. On the other hand, their chemical resistance, especially their environmental stress rupture resistance, is insufficient in demanding applications. Also, they are not as fluid as desirable, when very easily melt processible materials are needed.

Poly(aryl ether ketone)s, in particular polyetheretherketones (PEEK) and polyetherketoneketones (PEKK), offer an excellent thermal stability, very high stiffness and strength, and really excellent chemical resistance, including excellent resistance to environmental stress rupture resistance. On the other hand, they are expensive, exhibit poor toughness and impact resistance (with brittle failures) and have a rather low heat deflection temperature, which does not make them suitable, in general, for ESD applications.

As thoroughly explained in "Thermoplastic Composites with Vapor Grown Carbon Fiber", a dissertation presented by Jaewoo Lee in August 2005 to the faculty of the Fritz J. and Dolores H. Russ College of Engineering and Technology of Ohio University in partial fulfillment of the requirements for the Degree of Doctor of Philosophy, the whole content of which is hereby incorporated by reference, elemental carbon exists in various forms, such as amorphous, graphite or diamond, and can combine with itself in three different types of hybridization, which combinations result in diverse structural forms, the so called carbon allotropes.

Carbon black powder, commercialized notably as KETJENBLACK, consists typically of essentially spherical particles of uncombined, amorphous elemental carbon having a number average diameter of about 30 nm, a specific surface area of 800 m²/g and an electrical conductivity above 10⁻¹ ohm.cm.

The first demand in industry of carbon allotropes was carbon fiber, which has been appreciated for several years in application where a high strength and a high modulus are needed. To meet the demand of carbon fibers, these ones have been continuously fabricated based on polymer precursors, such as polyacrylonitrile or pitch precursors. These conventional carbon fibers have typically a number average diameter of about 7000 nm, and a number average length of about 6 µm (if unmilled) down to as low as about 150 microns (after milling) ; their specific surface area (BET) is typically of about 2 m²/g and their bulk density is typically of about 0.8 g/cm³. Their electrical resistivity is typically of about 10⁻³ ohm.cm.

To fabricate more advanced fibers under control conditions, the catalytic chemical vapor deposition (CVD) process was developed in the early 1970's, laying the fundamental basis for vapor grown carbon fiber production. Vapor grown carbon fibers form a new class of highly graphitic fibrous carbon nanofillers, and offer advantages of economy and simpler processing over continuous-fiber composites. Vapor grown carbon fibers are known to have good mechanical properties, and to be good anti-frictional agents. Besides, vapor grown carbon fibers are known to have a good electrical conductivity : their electrical resistivity is typically of about 10⁻⁴ ohm.cm. The above referenced dissertation deals mainly with the manufacture and mechanical properties of composites composed of nylon 6 and vapor grown carbon fibers. Vapor grown carbon fibers are closely related with carbon nanotubes regarding their structure and properties.

Precisely, carbon nanotubes can be viewed as nanosize hollow carbon fibers. They were first identified by Iijima in 1991. Processes to prepare them, their properties and several of their potential applications have been described, for example in « Carbon Nanotubes - Preparation and Properties » published in 1997 by T.W. Ebbesen (© CRC Press Inc.), the whole content of which is hereby incorporated by reference in the present specification. Carbon nanotubes exist in two primary forms, a single wall carbon nanotube (SWCNT) and a multi wall carbon nanotube (MWCNT). A single wall carbon nanotube (SWCNT) comprises generally a single graphene plane rolled into a cylindrical shape having a diameter of a few nanometers. Depending on how the graphene layer is rolled, it can be distinguished notably between SWCNT rolled in "arm-rest", SWCNT in "zigzags" and chiral SWCNT. A multi wall carbon nanotube (MWCNT) comprises generally co-centric graphene layers, such as cylinders in the cylinder. The first attention on carbon nanotubes was regarding their electrical properties, since nanotubes can be treated as a one-dimensional quantum wire ; their electrical resistivity is typically of about 10⁻⁴ ohm.cm. Later on, researchers figured out that carbon nanotubes exhibit outstanding mechanical properties (strength resistance, pressure resistance, flexibility, ...). Based on certain informal contacts with customers, it is likely that certain compositions including a polyphenylsulfone and carbon nanotubes have already been tested or used in ESD applications.

There remains however a strong need for a thermoplastic polymer composition suitable for ESD applications, offering excellent protection from electrostatic discharge notably by providing the exact degree of conductivity required for ESD protection, together with a good thermal stability, a high stiffness, a high strength, a high chemical resistance (especially, high resistance to environmental stress rupture resistance), a high toughness and high impact resistance (with ductile failures) and a high heat deflection temperature. In particular, it would be especially desirable to provide a polymer composition offering excellent protection from electrostatic discharge, with substantially the same level of toughness as that of neat poly(biphenyl ether sulfone (i.e. no break at unnotched Izod ASTM D4812 test), and with a chemical resistance much higher than that of poly(biphenyl ether sulfone)s.

### THE INVENTION

Quite unexpectedly, this unique combination of properties is met by a polymer composition (C) comprising :
- at least one poly(aryl ether ketone) (P1),
- at least one poly(biphenyl ether sulfone) (P2), and
- at least one fibrous carbon nanofiller (N)
characterized in that the fibrous carbon nanofiller (N) is chosen from carbon nanohorns. Another aspect of the present invention is directed to a shaped article or a part of a shaped article comprising the polymer composition (C) as above described.

Still another aspect of the present invention is directed to the use of at least one fibrous carbon nanofiller (N) as additive of a polymer composition (C) comprising at least one poly(aryl ether ketone) (P1) and at least one poly(biphenyl ether sulfone) (P2), to discharge electrostatic charges of said polymer composition (C).

According the above aspect, the polymer composition may be notably in the form of a shaped article or part of a shaped article.

### BRIEF DESCRIPTION OF THE DRAWINGS

Figure 1 is an illustration of a single wall carbon nanohorn (SWCNH).
Figure 2 is a photograph of a dahlia-like aggregate of carbon nanohorns.

### DETAILED DESCRIPTION OF THE INVENTION

The weight of the poly(aryl ether ketone) (P1), based on the total weight of the poly(aryl ether ketone) (P1) and the poly(biphenyl ether sulfone) (P2), is generally above 45 %, preferably above 50 %, more preferably above 55 % and still more preferably above 57,5 %. On the other hand, the weight of the poly(aryl ether ketone) (P1), based on the total weight of the poly(aryl ether ketone) (P1) and the poly(biphenyl ether sulfone) (P2), is generally below 75 %, preferably below 70 %, more preferably below 65 % and still more preferably below 62,5 %.

The total weight of the poly(aryl ether ketone) (P1) and the poly(biphenyl ether sulfone) (P2), based on the total weight of the polymer composition (C), is advantageously above 65 %, preferably above 75 %, more preferably above 85 % and still more preferably above 92 %. On the other hand, the total weight of the poly(aryl ether ketone) (P1) and the poly(biphenyl ether sulfone) (P2), based on the total weight of the polymer composition (C), is advantageously below 99.9 %, preferably below 99.5 % , more preferably below 99 %, and still more preferably below 98.0 %.

The weight of the poly(aryl ether ketone) (P1), based on the total weight of the polymer composition (C), is advantageously above 40 %, preferably above 45 %, and more preferably above 50 %. On the other hand, the weight of the poly(aryl ether ketone) (P1), based on the total weight of the polymer composition (C), is advantageously below 70 %, preferably below 65 %, and more preferably below 60 %.

The weight of the poly(biphenyl ether sulfone) (P2), based on the total weight of the polymer composition (C), is advantageously above 20 %, preferably above 25 %, and more preferably above 30 %. On the other hand, the weight of the poly(biphenyl ether sulfone) (P2), based on the total weight of the polymer composition (C), is advantageously below 50 %, preferably below 45 %, and more preferably below 40 %.

The weight of the fibrous carbon nanofiller (N), based on the total weight of the polymer composition (C), is advantageously above 0.1 wt. %, preferably above 0.5 wt. %, more preferably above 1.0 wt. % and still more preferably above 2.0 wt. %. On the other hand, the amount of the fibrous carbon nanofiller (N), based on the total weight of the polymer composition (C), is advantageously below 20 wt. %, preferably below 15 wt. %, more preferably below 10 wt. %, and still more preferably below 8.0 wt. %. Certain suitable weight amounts of the fibrous carbon nanofiller (N) are 3.0, 4.0, 5.0, 6.0 and 7.0 %, based on the total weight of the polymer composition (C).

### The poly(aryl ether ketone) (P1)

As previously mentioned, the polymer composition (C) comprises at least one poly(aryl ether ketone) (P1).

For the purpose of the present invention, the term "poly(aryl ether ketone)" is intended to denote any polymer of which more than 50 wt. % of the recurring units are recurring units (R1) of one ore more of the following formulae : 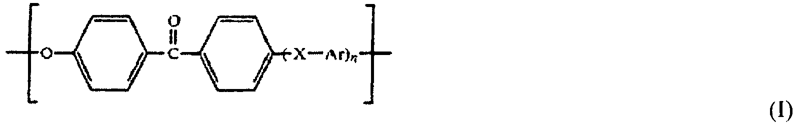 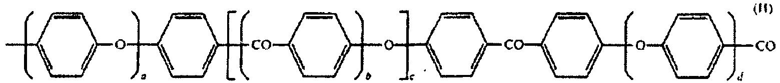 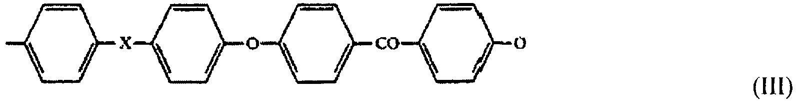 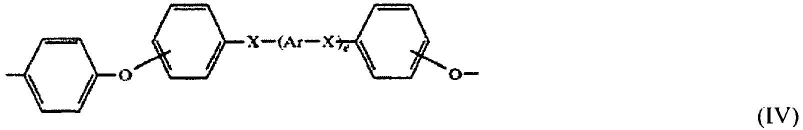 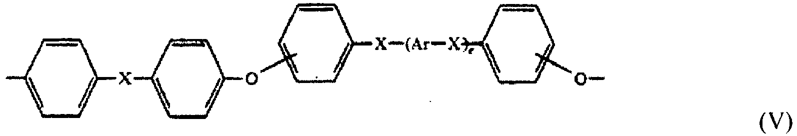 wherein :
- Ar is independently a divalent aromatic radical selected from phenylene, biphenylene or naphthylene,
- X is independently O, C(=O) or a direct bond,
- n is an integer of from 0 to 3,
- b, c, d and e are 0 or 1,
- a is an integer of 1 to 4, and
- preferably, d is 0 when b is 1.

Recurring units (R1) may notably be chosen from : 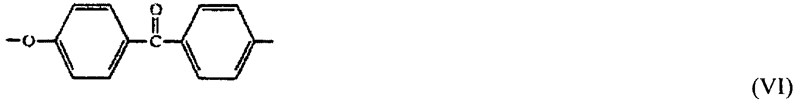 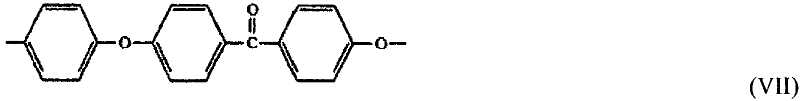 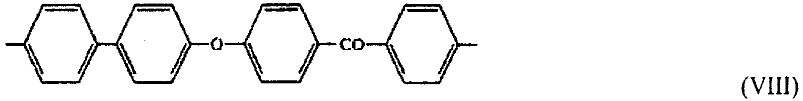 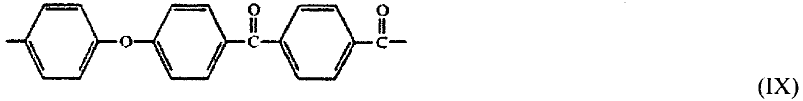 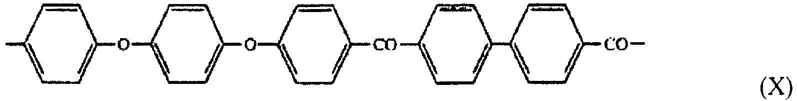 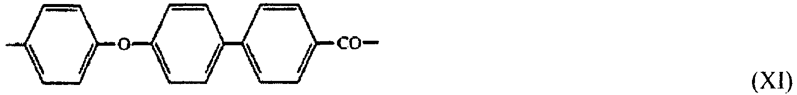 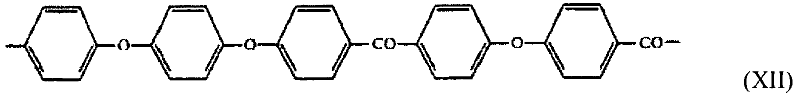 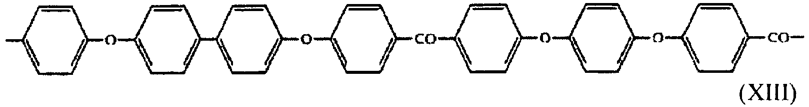 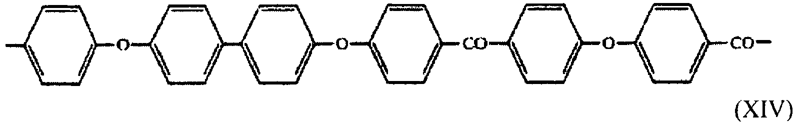 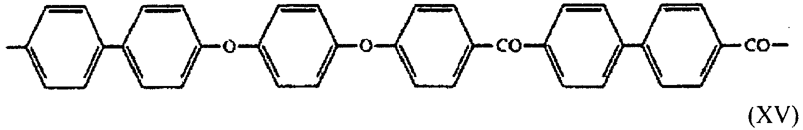 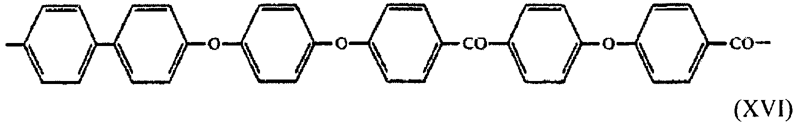 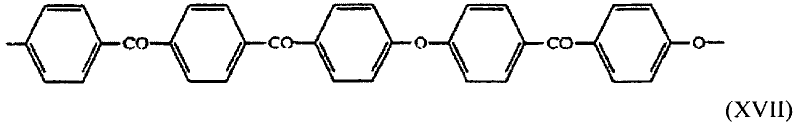 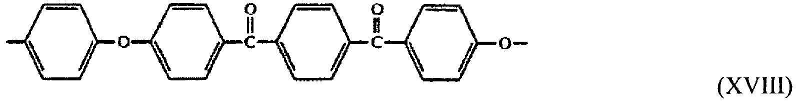 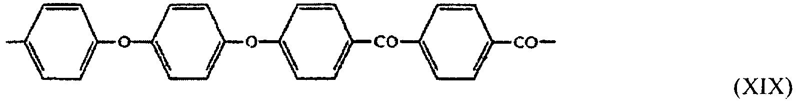 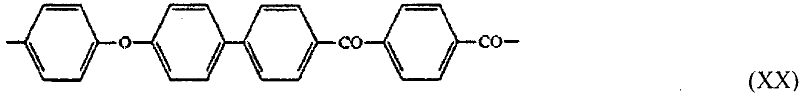 and

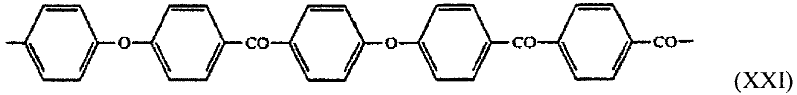

Preferably, recurring (R1) are chosen from : 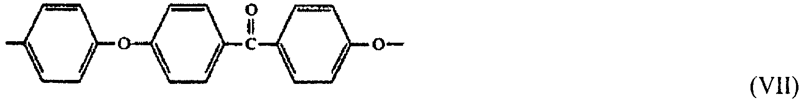 and

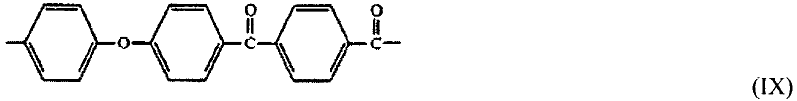

More preferably, recurring units (R1) are :

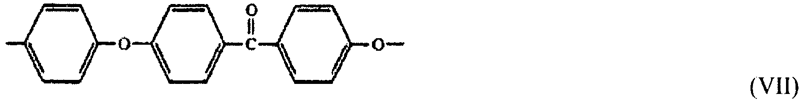

For the purpose of the present invention, a polyetheretherketone is intended to denote any polymer of which more than 50 wt. % of the recurring units are recurring units (R1) of formula (VII).

Preferably more than 70 wt. %, and more preferably more than 85 wt. % of the recurring units of the poly(aryl ether ketone) (P1) are recurring units (R1). Still more preferably, essentially all the recurring units of the poly(aryl ether ketone) (P1) are recurring units (R1). The most preferably, all the recurring units of the poly(aryl ether ketone) (P1) are recurring units (R1).

Excellent results are obtained when the poly(aryl ether ketone) (P1) is a polyetheretherketone homopolymer, i.e. a polymer of which essentially all, if not all, the recurring units are of formula (VII). VICTREX^{®} 150 P and VICTREX^{®} 450 P PEEKs from Victrex Manufacturing Ltd., KETASPIRE^{®} and GATONE^{®} PEEKs from Solvay Advanced Polymers, L.L.C. are examples of polyetheretherketone homopolymers.

The poly(aryl ether ketone) (P1) has advantageously a reduced viscosity (RV) of at least 0.60 dUg, as measured in 95-98 % sulfuric acid (d = 1.84 g/ml) at a poly(aryl ether ketone) concentration of 1 g/100 ml. The measurement is performed using a No 50 Cannon-Fleske viscometer. RV is measured at 25°C in a time less than 4 hours after dissolution, to limit sulfonation. The RV of the poly(aryl ether ketone) (P1) is preferably of at least 0.65 dl/g, more preferably of 0.70 dl/g. Besides, the RV of the poly(aryl ether ketone) (P1) is advantageously of at most 1.20 dl/g, preferably at most 1.10 and still more preferably at most 1.00 dl/g.

The poly(aryl ketone) (P1) can be prepared by any method.

One well known in the art method contains reacting a substantially equimolar mixture of at least one bisphenol and at least one dihalobenzoid compound or at least one halophenol compound as described in Canadian Pat. No. 847,963. Non limitative example of bisphenols useful in such a process are hydroquinone, 4,4'-dihydroxybiphenyl and 4,4'-dihydroxybenzophenone ; non limitative examples of dihalobenzoid compounds useful in such a process are 4,4'-difluorobenzophenone, 4,4'-dichlorobenzophenone and 4-chloro-4'-fluorobenzophenone ; non limitative examples of halophenols compounds useful in such a process are 4-(4-chlorobenzoyl)phenol and (4-fluorobenzoyl)phenol. Accordingly, PEEK homopolymers may notably be produced by the nucleophilic process as described in, for example, U.S. Pat. No. 4,176,222, the whole content of which is herein incorporated by reference.

Another well known in the art method to produce PEEK homopolymers comprises electrophilically polymerizing phenoxyphenoxybenzoic acid, using an alkane sulfonic acid as solvent and in the presence of a condensing agent, as the process described in U.S. Pat. 6,566,484, the whole content of which is herein incorporated by reference. Other poly(aryl ether ketone)s may be produced by the same method, starting from other monomers than phenoxyphenoxybenzoic acid, such as those described in U.S. Pat. Appl. 2003/0130476, the whole content of which is also herein incorporated by reference.

The polymer composition (C) can comprise one and only one poly(aryl ether ketone) (P1). Alternatively, it can comprise two, three, or even more than three poly(aryl ether ketone)s (P1). Certain preferred mixes of poly(aryl ether ketone)s (P1) are :
mixes consisting of (i) at least one poly(aryl ether ketone) (P1a) of which more than 50 wt. % of the recurring units, preferably essentially all the recurring units, and still more preferably all the recurring units are of formula 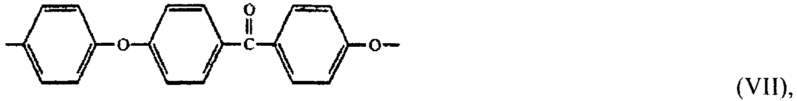 with (ii) at least one poly(aryl ether ketone) (P1b) of which more than 50 wt. % of the recurring units, preferably essentially all the recurring units, and still more preferably all the recurring units are of formula 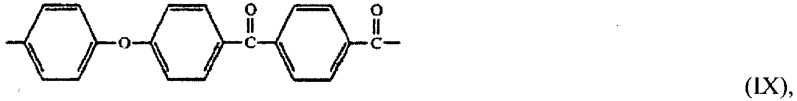 and, optionally in addition, with (iii) at least one other poly(aryl ether ketone) (P1c) different from poly(aryl ether ketone)s (P1a) and (P1b) ;
in particular, mixes consisting of (i) at least one poly(aryl ether ketone) (P1a) of which essentially all, if not all, the recurring units arc of formula (VII) with (ii) at least one poly(aryl ether ketone) (P1b) of which essentially all, if not all, the recurring units are of formula (IX) ;
still more particularly, binary mixes consisting of (i) one poly(aryl ether ketone) (P1a) of which all the recurring units are of formula (VII) with (ii) one poly(aryl ether ketone) (P1b) of which all the recurring units are of formula (IX).

### The poly(biphenyl ether sulfone) (P2)

For the purpose of the invention, a poly(biphenyl ether sulfone) is intended to denote a polycondensation polymer of which more than 50 wt. % of the recurring units are recurring units (R2) of one or more formulae containing at least one p-biphenylene group : 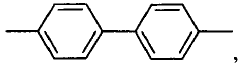 at least one ether group (-O-) and at least one sulfone group (-SO₂-).

Preferably, recurring units (R2) are recurring units of one or more formulae of the general type : 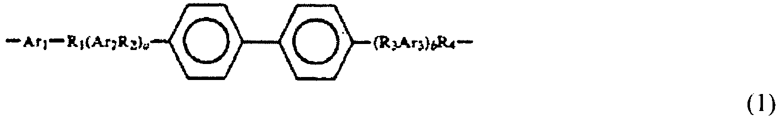 wherein R₁ through R₄ are -O-, -SO₂-, -S-, -CO-, with the proviso that at least one of R₁ through R₄ is -SO₂- and at least one of R₁ through R₄ is -O- ; Ar₁, Ar₂ and Ar₃ are arylene groups containing 6 to 24 carbon atoms, and are preferably phenylene or p-biphenylene; and a and b are either 0 or 1.

More preferably, recurring units (R2) are chosen from 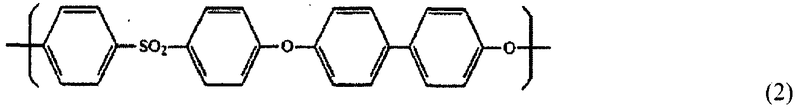 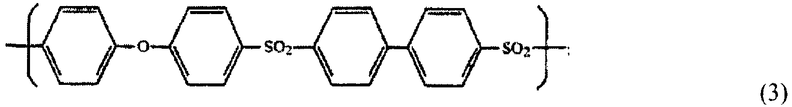 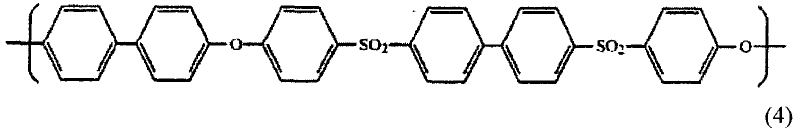 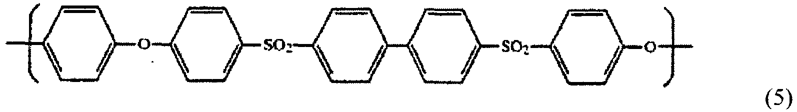 and

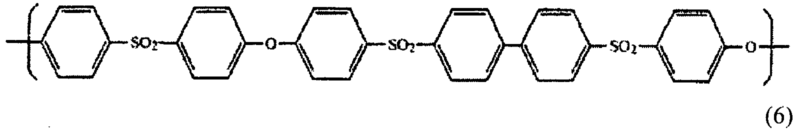

Still more preferably, recurring units (R2) are either 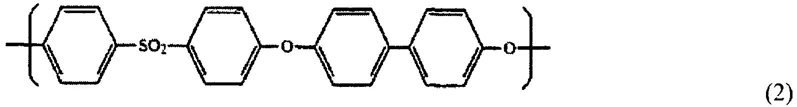 or 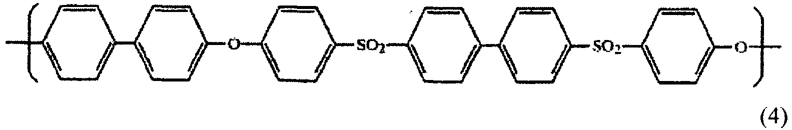 or a mix of 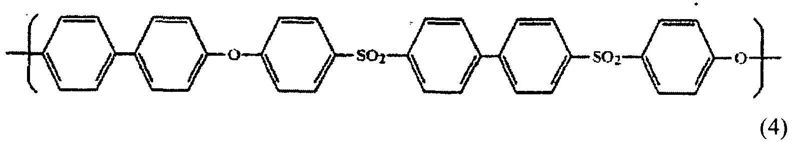 with 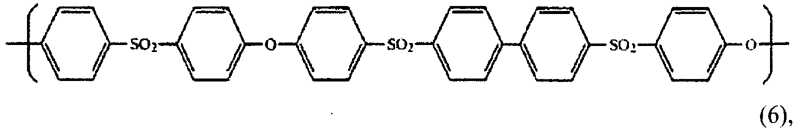 wherein the weight amount of the recurring units (6) contained in the mix, based on the total amount of the recurring units (4) and (6) of which the mix consists, is between 10 and 99 %, and preferably between 50 and 95 %.

On one hand, using recurring units (2) as recurring units (R2) provides in general the best overall cost-properties balance, and the highest level of toughness. For the purpose of the present invention, a polyphenylsulfone is intended to denote any polycondensation polymer of which more than 50 wt. % of the recurring units are recurring units (R2) of formula (2).

On the other hand, the use of recurring units (4) or of mixes of recurring units (4) and (6) as recurring units (R2) results in a poly(biphenyl ether sulfone) (P2) with an especially high glass transition temperature. Now, in certain particular ESD applications, the use temperature is very high ; recurring units (4) and mixes of recurring units (4) and (6), since they provide a poly(biphenyl ether sulfone) (P2) with a glass transition temperature generally well above the use temperature, are especially well suited for such particular ESD applications. Besides, using a mix of recurring units (4) with recurring units (6) as recurring units (R2) makes it often possible to achieve substantially the same level of properties as the one obtained when using recurring units (4) as sole recurring units (R2), but at a somewhat more attractive cost.

The poly(biphenyl ether sulfone) (P2) may be notably a homopolymer, a random, alternating or block copolymer. When the poly(biphenyl ether sulfone) (P2) is a copolymer, its recurring units may notably be composed of (i) recurring units (R2) of at least two different formulae chosen from formulae (2) to (6), or (ii) recurring units (R2) of one or more formulae (2) to (6) (especially, recurring units of formula (2)) and recurring units (R2*), different from recurring units (R2), such as : 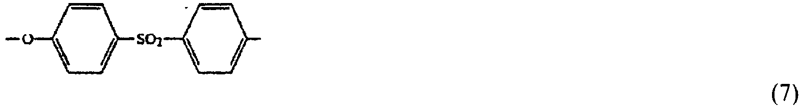 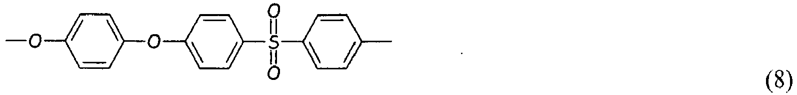 and

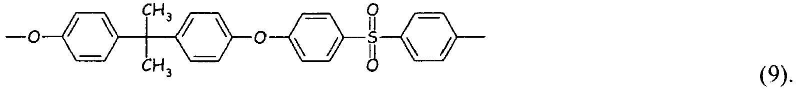

Preferably more than 70 wt. %, more preferably more than 85 wt. % of the recurring units of the poly(biphenyl ether sulfone) (P2) are recurring units (R2). Still more preferably, essentially all the recurring units of the poly(biphenyl ether sulfone) (P2) are recurring units (R2). Most preferably, all the recurring units of the poly(biphenyl ether sulfone) (P2) are recurring units (R2).

Excellent results are in general obtained when the poly(biphenyl ether sulfone) (P2) is a polyphenylsulfone homopolymer, i.e. a polymer of which essentially all, if not all, the recurring units are of formula (2). RADEL^{®} R polyphenylsulfone from Solvay Advanced Polymers, L.L.C. is an example of a polyphenylsulfone homopolymer.

In certain particular ESD applications where the use temperature is very high, excellent results are obtained when the poly(biphenyl ether sulfone) (P2) is a homopolymer of recurring units (4), i.e. a polymer of which essentially all, if not all, the recurring units are of formula (4). In such particular ESD applications, excellent results are also obtained when the poly(biphenyl ether sulfone) (P2) is a copolymer of which essentially all, if not all, the recurring units are a mix of recurring units of formulae (4) and (6).

The poly(biphenyl ether sulfone) (P2) can be prepared by any method. Methods well known in the art are those described in U.S. Pat. Nos. 3,634,355; 4,008,203; 4,108,837 and 4,175,175, the whole content of which is herein incorporated by reference.

The polymer composition (C) can comprise one and only one poly(biphenyl ether sulfone) (P2). Alternatively, it can comprise two, three, or even more than three poly(biphenyl ether sulfone)s (P2). Certain preferred mixes of poly(biphenyl ether sulfone)s (P2) are :
- mixes consisting of (i) at least one poly(biphenyl ether sulfone) (P2a) of which more than 50 wt. % of the recurring units, preferably essentially all the recurring units, and still more preferably all the recurring units are of formula 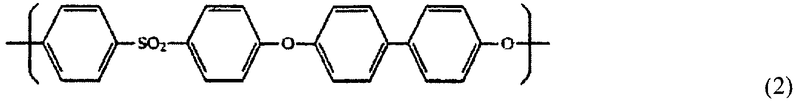 with (ii) at least one poly(biphenyl ether sulfone) (P2b) of which more than 50 wt. % of the recurring units, preferably essentially all the recurring units, and still more preferably all the recurring units are of formula 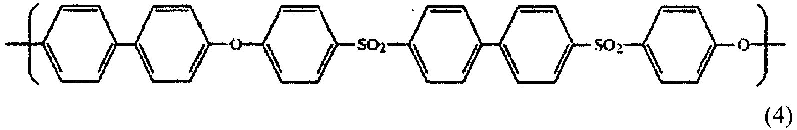 and, optionally in addition, with (iii) at least one other poly(biphenyl ether sulfone) (P2c) different from poly(biphenyl ether sulfone)s (P2a) and (P2b) ; in particular, mixes consisting of (i) at least one poly(biphenyl ether sulfone) (P2a) of which essentially all, if not all, the recurring units are of formula (2) with (ii) at least one poly(biphenyl ether sulfone) (P2b) of which essentially all, if not all, the recurring units are of formula (4) ;
   still more particularly, binary mixes consisting of (i) one poly(biphenyl ether sulfone) (P2a) of which all the recurring units are of formula (2) with (ii) one poly(biphenyl ether sulfone) (P2b) of which all the recurring units are of formula (4) ;
- mixes consisting of (i) at least one poly(biphenyl ether sulfone) (P2a) of which more than 50 wt. % of the recurring units, preferably essentially all the recurring units, and still more preferably all the recurring units are of formula 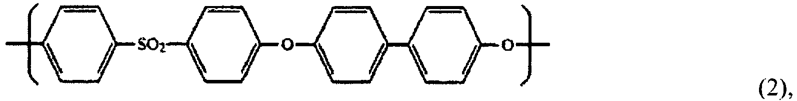 with (ii) at least one poly(biphenyl ether sulfone) (P2d) of which more than 50 wt. % of the recurring units, preferably essentially all the recurring units, and still more preferably all the recurring units are a mix (M46) consisting of recurring units of formula 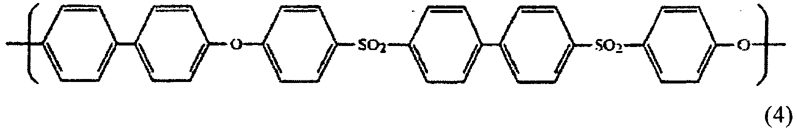 with recurring units of formula 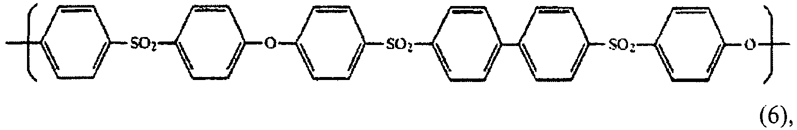 wherein the weight amount of the recurring units (6) contained in the mix (M46), based on the total amount of the recurring units (4) and (6) of which the mix consists, is between 10 and 99 %, and preferably between 50 and 95 %, and, optionally in addition, with (iii) at least one other poly(biphenyl ether sulfone) (P2e) different from poly(biphenyl ether sulfone)s (P2a) and (P2d) ; in particular, mixes consisting of (i) at least one poly(biphenyl ether sulfone) (P2a) of which essentially all, if not all, the recurring units are of formula (2) with (ii) at least one poly(biphenyl ether sulfone) (P2d) of which essentially all, if not all, the recurring units are a mix (M46) consisting of recurring units (4) and (6) ;
   still more particularly, binary mixes consisting of (i) one poly(biphenyl ether sulfone) (P2a) of which all the recurring units are of formula (2) with (ii) one poly(biphenyl ether sulfone) (P2d) of which all the recurring units are a mix (M46) consisting of recurring units (4) and (6).

### The fibrous carbon nanofiller (N)

The filler (N) is a carbon nanofiller in that it consists of nanoparticles comprising elemental carbon. Generally, more than 90 wt. % of the nanoparticles consist of elemental carbon. Preferably, more than 95 wt. % of the nanoparticles consist of elemental carbon. Still more preferably, more than 99 wt. % of the nanoparticles consist of elemental carbon. Good results are obtained when the nanoparticles consist essentially of elemental carbon. Excellent results are obtained when the nanoparticles consist of elemental carbon. More than 50 wt. %, preferably more than 80 %, still more preferably more than 90 wt. % of the elemental carbon are in the graphitic form. Excellent results are obtained when the elemental carbon is essentially in the graphitic form. Excellent results are obtained when the elemental carbon is in the graphitic form.

From a practical point of view, any particle is three-dimensional, and can thus be characterized notably by three characteristic dimensions ("length", "width" and "height"). However, some particles are such that two of their characteristic dimensions are considerably lower than respectively the third one. The terms "considerably lower" should generally be understood as "more than 10 times lower", and preferably as "more than 100 times lower". Precisely, for the purpose of the present invention, a fibrous nanofiller is one consisting of nanoparticles having a shape of a fiber, i.e. particles of which two out of their characteristic dimensions ("thickness-width" and "thickness-height") are, in average (in number), considerably lower than their third one ("length") ; insofar as the "thickness-width" is often close to the "thickness-height" of the fibrous nanoparticles and that the base of the fibrous nanoparticles often looks like a circle, the "thickness-width" and the "thickness-height" are commonly globalized by the skilled person in a unique parameter, namely the diameter of the fiber.

Finally, the filler (N) is a nanofiller in the sense that the number average "thickness-width" and the number average "thickness-height" of the nanoparticles, or in an easier and commonly used way, the number average diameter is generally below 1000 nm, preferably below 500 nm, and more preferably at most 200 nm.

The number average diameter and the number average length of the carbon nanoparticles can be determined by any technique known from the skilled in the art; advantageously, an electronic microscopy technique coupled with a software image analysis technique will be used.

The carbon nanoparticles are usually available in the form of a material containing above 65 % of said carbon nanoparticles. Preferably, the carbon nanoparticles are available in the form of a material containing at least 90 % of carbon nanoparticles, and more preferably at least 95 % of carbon nanoparticles.

Any fibrous carbon nanofiller is desirable. The skilled person will easily recognize the fibrous carbon nanofiller which fits best its composition and encompassed end uses.

Usually, the fibrous carbon nanofiller can be chosen from carbon nanotubes, vapor grown carbon fibers and carbon nanohorns. In the present invention, the fibrous carbon nanofiller is chosen from carbon nanohorns.

### The carbon-nanotubes

A carbon nanotube (CNT) is intended to denote any material the structure of which comprises at least one graphene layer (as above defined) wound in the form of a hollow cylinder capped at least one of its ends, and preferably at each of them, by a half molecule of a fullerene (as above defined). The term "cylinder" must be understood, with a broad geometric meaning, as a surface resulting from the rotation of a straight line parallel to a fixed rectilinear axis, thereby generating a curve around said axis. As examples of possible shapes of this curve, the circle and the ellipse can be notably cited.

In the carbon nanotubes useful for the present invention, the carbon atoms are generally linked in a covalent manner between each other, their electronic orbitals 2s, 2pₓ and 2p_{y} being in a hybrid sp² configuration.

The structure of the certain carbon nanotubes useful for the present invention can comprise no more than one graphene monolayer ; the case being, the carbon nanotubes are generally referred to as "single wall carbon nanotubes" (SWCNT).

The structure of certain other carbon nanotubes useful for the present invention can also comprise a coaxial assembly of several SWCNT ; the case being, the carbon nanotubes are generally referred to as "multiwall carbon nanotube" (MWCNT). The MWCNT comprise generally above 3, preferably above 6, and more preferably above 10 coaxial SWCNT ; in addition, the MWCNT comprise generally less than 60, preferably less than 40, and more preferably less than 20 coaxial SWCNT.

The number average diameter of the carbon nanotubes useful for the present invention may vary to a large extent, depending notably on whether SWCNT or MWCNT are used. Thus, on one hand, the number average diameter of a SWCNT is usually above 0.3 nm, and preferably above 0.6 nm ; besides, the diameter of a SWCNT is usually below 3.0 nm, and preferably below 2.0 nm. On the other hand, the number average diameter of a MWCNT is generally of at least 3 nm and preferably above 6 nm ; it is generally of less than 60 nm, preferably of less than 40 nm, and more preferably of less than 20 nm. Certain suitable SWCNT have an a number average diameter of from about 10 to about 15 nm.

The carbon nanotubes useful for the present invention have usually a length considerably much higher than their diameter (see for example Kirk-Othmer Encyclopedia of Chemical Technology (© John Wiley & Sons 2005), volume 17, Nanotechnology, pages 2 to 4). Concretely, the number average length diameter of the carbon nanotubes useful according to the present invention, measured along their longitudinal axis, can be several hundredths or even several thousands times higher than their number average diameter. This number average length is usually above 100 nm, preferably above 1 micron, and more preferably above 3 microns. It is generally below 100 microns, preferably below 50 microns, more preferably below 30 microns.

The number average diameter and the number average length of the carbon nanotubes can be determined by any technique known from the skilled in the art ; advantageously, an electronic microscopy technique coupled with a software image analysis technique will be used.

The carbon nanotubes useful for the present invention may be fabricated by any known technique. Various methods to fabricate and subsequently purify them arc described in « Carbon Nanotubes - Preparation and Properties », supra, pages 139 to 160. Non limitative examples of such methods include : arc discharge, pulsed laser vaporization (PLV), chemical vapor deposition (CVD) and gas-phase process. Arc discharge is a plasma-based process using a solid carbon electrode for MWCNT, or carbon composite for SWCNT. Pulsed-laser vaporization (PLV) method is used essentially for producing SWCNT, using a high power pulsed laser aimed at powdered graphite loaded with a metal catalyst. Chemical vapor deposition (CVD) can be used for making both SWCNT and MWCNT, by flowing heated precursor gas over a metallic catalyst. Also, a gas-phase process is available to produce both SWCNT and MWCNT.

The carbon nanotubes have usually a purity of above 65 % of elemental carbon, the remaining consisting possibly of residual catalytic impurities. Preferably, the carbon nanotubes contain at least 90 % of elemental carbon, and more preferably at least 95 % of elemental carbon.

Optionally, the carbon nanotubes useful for the present invention can be functionalized, i.e. their external surface can be chemically modified by functional groups, e.g. to increase their compatibility with the polymers (P1) and/or (P2). Said functionalization of the carbon nanotubes can be of non covalent or covalent nature, as explained notably in Kirk-Othmer Encyclopedia of Chemical Technology, supra, pages 8 et 9). The covalent functionalization is often preferred and can be achieved in a conventional manner by treating the carbon nanotubes with agents like oxidizing agents, acids and bases. The functional groups can be notably carboxyl groups, ester groups, ketone groups, sulfonate or sulfonyl groups.

SWCNT are commercially available notably from Sumitomo Shoji. MWCNT are commercially available notably from Hyperion Catalysis, Mitsui Bussan, Nikkisou, Nanocyl, Applied Sciences, Shenzhen Nanotech, CNI, Sun Nanotech and Iljin Nanotech.

The vapor grown carbon fibers.

The structure of vapor grown carbon fibers is generally close to that of carbon nanotubes. Vapor grown carbon fibers have generally a multi-layered shell having a very thin central hollow portion, wherein a plurality of carbon hexagonal network layers are grown around the hollow portion so as to form annular rings.

The number average diameter of a vapor grown carbon fiber is usually above 30 nm, and very often at least 60 nm. On the other hand, the number average diameter of a vapor grown carbon fiber is usually below 1000 nm, very often below 500 nm, and often of at most 200 nm.

The number average diameter of the vapor grown carbon fibers useful for the present invention may vary to a large extent, depending notably on the type of the vapor grown carbon fibers that are used. Thus, vapor grown carbon fibers are commonly classified in different types, depending on their number average diameter and other properties :
- standard vapor grown carbon fibers having a number average diameter from 120 mm to 200 nm, referred by certain manufacturers as "vapor grown carbon fibers-high" (VGCF-H) ; usually, such standard vapor grown carbon fibers have a specific surface area (BET) of from about 10 to about 17 m²/g ; their bulk density can be notably of about 0.04 g/cm³ ;
- finer vapor grown carbon fibers, referred by certain manufacturers as "vapor grown carbon fibers-small" (VGCF-S), having a number average diameter between 90 nm and 120 nm ; usually, such finer vapor grown carbon fibers have a specific surface area (BET) of between 17 and 22 m²/g ; their bulk density can be notably of about 0.02 g/cm³ ;
- still finer vapor grown carbon fibers, referred by certain manufacturers as vapor grown nanofibers (VGNF), having a number average diameter of from 60 to 90 nm ; usually, such still finer vapor grown carbon fibers have a specific surface area (BET) of from 22 to 38 m²/g ; their bulk density can be notably of about 0.02 g/cm³.

The vapor grown carbon fibers useful for the present invention have usually a length considerably much higher than their diameter. Concretely, the number average length diameter of the vapor grown carbon fibers useful according to the present invention, measured along their longitudinal axis, can be several tens or even several hundredths times higher than their number average diameter. This number average length is usually above 1 micron, and very often above 5 microns. It is generally below 200 microns, and very often of at most 100 microns ; it is preferably of at most 50 microns. Certain particularly valuable VGCF useful for the present invention have a number average diameter of from about 10 to about 20 microns.

The number average diameter and the number average length of the vapor grown carbon fibers can be determined by any technique known from the skilled in the art; advantageously, an electronic microscopy technique coupled with a software image analysis technique will be used.

The vapor grown carbon fibers may be fabricated by any known technique. Various methods to fabricate vapor grown carbon fibers are described notably in "Thermoplastic Composites with Vapor Grown Carbon Fiber", pages 22-30 (as above referenced). For example, vapor grown carbon fiber (VGCF) can be produced by thermally decomposing a raw material gas, such as hydrocarbon gas, in a vapor phase in the presence of a metallic catalyst, and by growing the decomposition product into a fibrous shape.

Vapor grown carbon nanotubes are notably commercially available as VGCF^{™} from Showa Denko K.K., and as PYROGRAF^{®} from ASI or its subsidiary Pyrograf Products, Inc.

### The carbon nanohorns

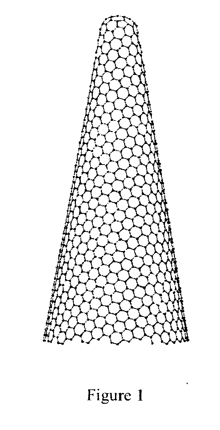

Carbon nanohorns have generally a graphitic carbon atom structure close to, if not similar, to that of normal carbon nanotubes. A picture of a typical structure of a carbon nanohorn (available at http://www.nanonet.go.jp/english/mailmag/2004/023a.html) is shown in figure 1.

An important characteristic of the carbon nanohorns is that, when many of the nanohorns group together, an aggregate (a secondary particle) of about 100 nanometers is created.

The aggregates of carbon nanohorns have generally a dahlia-like shape with a large number of horn-shaped short single-layered nanotubes that stick out in all directions ; the tips of these short nanotubes are generally capped with five-membered rings.

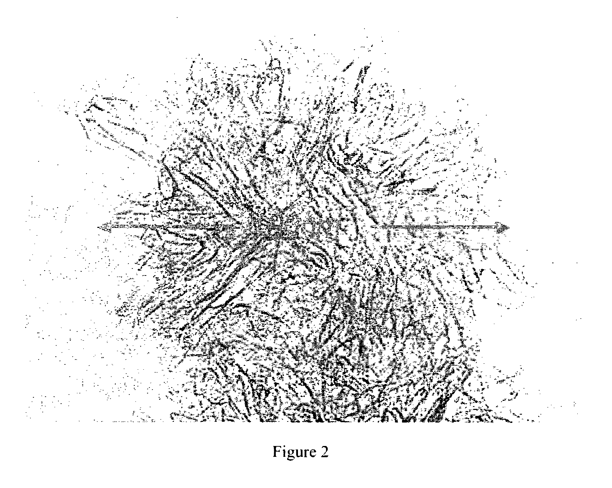

A photograph of a typical dahlia-like aggregate of carbon nanohorns (also available at http://www.nanonet.go.jp/english/mailmag/2004/023a.html) is shown in figure 2. The aggregate is of about 100 nm, as indicated on the photograph.

The structure of the dahlia-like aggregates is reported to be very complex at the core : the core part seems to consist of planer graphitic network for the most part; it is so stable that one cannot separate it even after ultrasonication in a solvent or thermal treatment; then, core part is supposed to be constructed not only with weak interlayer interaction of planar network but also with relatively tight covalent bonding.

Unlike carbon nanotubes, carbon nanohorns can be made simply without the use of a catalyst. In particular, carbon nanohorn aggregates can be produced with a yield of more than 90 % through laser vaporization of carbon at room temperature. Thus, compared with normal nanotubes, the nanohorns can be easily prepared with high purity. They are expected to become a low-cost raw material.

Carbon nanohorns are reported to be the best conductor of electricity on a nanoscale level that can ever be possible, and also probably the stiffest, strongest, and toughest fiber that can ever exist.

The surface of the carbon nanohorns can be modified chemically or can be partially damaged intentionally to modify their surface properties, e.g. their adsorbability.

The carbon nanohorns are notably commercially available from NEC and from Reade Advanced Materials.

### Optional ingredients of the polymer composition (C)

The polymer composition (C) may further contain conventional ingredients of poly(aryl ether ketone) and poly(biphenyl ether sulfone) compositions, including reinforcing agents, lubricating and/or anti-wear agents such as polytetrafluoroethylene, silicone oil and cured aromatic polyimide powders, heat stabilizers, anti-static agents, extenders, organic and/or inorganic pigments like TiO₂, carbon black, acid scavengers, such as MgO, stabilizers, i.e., metal oxides and sulfides such as zinc oxide and zinc sulfide, antioxidants, flame retardants, smoke-suppressing agents, and particulate fillers and nucleating agents such as talc, mica, titanium dioxide, kaolin and the like.

The weight of said optional ingredients, based on the total weight of polymer composition (C), ranges advantageously from 0 to 15 %, preferably from 0 to 10 %, more preferably from 0 to 5 %, still more preferably from 0 to 1 %. The polymer composition (C) may be essentially free, or even completely free, of said optional ingredients.

The polymer composition (C) is advantageously prepared by any conventional mixing method. A certain method comprises dry mixing the ingredients of the invented polymer composition of concern in powder or granular form, using e.g. a mechanical blender, then extruding the mixture into strands and chopping the strands into pellets. A certain other method comprises dispersing the fibrous carbon nanofiller in an organic solvent, dissolving the polymers (P1) and (P2) in the dispersion formed by the fibrous carbon nanofiller and the organic solvent (or dissolving the polymers (P1) and (P2) in an organic solvent, then adding the solution to the dispersion), and causing the polymers (P1) and (P2) contained at dissolved state in the dispersion to precipitate by the addition of a non solvent, as generally described in WO 03/064504, to SOLVAY.

As previously mentioned, another aspect of the present invention is directed to a shaped article or a part of a shaped article comprising the polymer composition (C) as above described.

Non limitative examples of shaped articles or parts of shaped articles in accordance with the present invention include :
- hard disk drive handling components such as head trays and HD trays ;
- (parts of) shaped articles which can be used in the semiconductor industry : wafer handling, test sockets, IC trays, semiconductor assemblies, and cell cassettes suitable for being used in the manufacture of semiconductors ;
- duplicating M : seemlessbelts, rollers
- cables;
- (parts of) shaped articles which can be used in the automotive field : fuel tubes, static paintings.

The present invention is described in greater detail below by referring to the examples; however, the present invention is not limited to these examples.

### First set of examples

Blends composed of a polyetheretherketone (PEEK) homopolymer, namely VICTREX^{®} 150 P PEEK (available from Victrex Manufacturing Ltd.), and of a polyphenylsulfone homopolymer (PPSU), namely RADEL^{®} R-5000 NT PPSU (available from SOLVAY ADVANCED POLYMERS, L.L.C.), were compounded as detailed hereafter. The RV of the VICTREX^{®} 150 P PEEK was measured by the method as above described : it was 0.78 dl/g.

The PEEK and the PPSU were fed to a Berstorff 25 mm co-rotating twin-screw extruder using two gravimetric feeders that were adjusted for each run to achieve the target blend ratio of PEEK to PPSU. The two individual polymers were also run through the extruder to generate the compounded controls for the blends.

The compounding conditions for all the blends and controls are shown in Table 1. The set points on the extruder were the same for all the runs.

**Table 1 Compounding Run Parameters Used for Compounding of PEEK/PPSU Blends and Controls**

| | Set Point | Actual |
|---|---|---|
| Barrel 2 Temp. (°C) | 350 | 338-349 |
| Barrel 3 Temp. (°C) | 370 | 365-371 |
| Barrel 4 Temp. (°C) | 390 | 386-395 |
| Barrel 5 Temp. (°C) | 400 | 367-377 |
| Barrel 6 Temp. (°C) | 400 | 381-401 |
| Barrel 7 Temp. (°C) | 380 | 380-387 |
| Barrel 8 Temp. (°C) | 380 | 380-389 |
| Die Adapter (°C) | 380 | 378-381 |
| Die (°C) | 380 | 343-344 |
| Screw Speed (RPM) | 225 | 225 |
| Drive Power Draw (Amp) | --- | 8-9 |
| Vacuum (in Hg) | --- | 26-27 |
| Die Pressure (psi) | --- | 454-525 |

Several properties of the polymer blends, that are generally important, or even critical, for a polymer composition to be used in an ESD application, were measured, using the test methods as indicated in table 2 below :

**Table 2**

| Property | Test Method |
|---|---|
| Tensile Strength (psi) | D-638 |
| Tensile Modulus (ksi) | D-638 |
| Yield Elongation (%) | D-638 |
| Elongation at Break (%) | D-638 |
| No-Notch Izod (ft-lb/in) | D-4812 |
| Dynatup (ft-lb) | D-3763 |
| Viscosity [410°C/50 s⁻¹] (Pa-s) | See below * |
| Heat deflection temperature (HDT) (°C), annealed | D-648 |

| | |
|---|---|
| * The melt viscosity at 410°C and 50 s⁻¹ shear rate was measured in a capillary rheometer. A 0.04 inch diameter x 0.8 inch length die was used with a 120° entrance angle. No dwell time was applied. | |

The results that were obtained are shown in table 3.

**Table 3**

| Property | PEEK 100 | PEEK 60/ PPSU 40 | PEEK 55/ PPSU 45 | PEEK 50/ PPSU 50 | PEEK 45/ PPSU 55 | PEEK 40/ PPSU 60 | PPSU 100 |
|---|---|---|---|---|---|---|---|
| Tensile Strength (psi) | 15000 | 12800 | 12600 | 12500 | 12200 | 12000 | 10800 |
| Tensile Modulus (ksi) | 580 | 446 | 426 | 417 | 399 | 386 | 317 |
| Yield Elongation (%) | NY | 6.1 | 6.4 | 6.5 | 6.7 | 6.8 | 7.9 |
| Elongation at Break (%) | 6.4 | 70 | 69 | 45 | 64 | 48 | 63 |
| No-Notch Izod (ft-lb/in) | 8.0 | NB | NB | NB | NB | NB | NB |
| Dynatup (ft-lb) | 9.3 | 58 | 47 | 43 | 50 | 48 | 40 |
| Viscosity [410°C/50 s⁻¹] (Pa-s) | 269 | 346 | 364 | 383 | 421 | 429 | 648 |
| HDT (°C), annealed | 162.5 | 188.7 | 191.3 | 193.4 | 194.2 | 195.5 | 211.8 |

| | | | | | | | |
|---|---|---|---|---|---|---|---|
| NY means "no yield" ; NB means "no break". | | | | | | | |

In addition, the environmental stress cracking resistance (ESCR) of the polymer blends was measured ; the ESCR is generally an important, or even critical, property for a polymer composition to be used in an ESD application. The ESCR was measured using parabolic flexural test jigs which generated a gradually increasing range of strains between about 0.2 and 2.0 % strain. 0.125 in-thick ASTM flexural specimens were clamped onto the test jigs to produce the continually varying strain and the assemblies were immersed into various solvents for 24 hours, and in one case (chloroform) for 1 hour, due to the partial solubility of PPSU in chloroform. The samples were removed, dried, and inspected for crazing or cracking at the end of the exposure duration.

The results that were obtained are shown in table 4.

**Table 4 PEEK/PPSU blends - ESCR Performance. Critical Strain and Stress to Induce Failure**

| **S**olvent, **Immersion time** | PEEK 100 | PEEK 60/ PPSU 40 | PEEK 55/ PPSU 45 | PEEK 50/ PPSU 50 | PEEK 45/ PPSU 55 | PEEK 40/ PPSU 60 | PPSU 100 |
|---|---|---|---|---|---|---|---|
| **MEK, 24 h** | | | | | | | |
| Critical Stress, psi | 5600 | 4300 | 3500 | 3200 | 2900 | 2300 | 950 |
| Critical Strain, % | 0.97 | 0.97 | 0.82 | 0.77 | 0.74 | 0.58 | 0.30 |
| **Toluene, 24 h** | | | | | | | |
| Critical Stress, psi | 5600 | 4900 | 4100 | 3600 | 3300 | 1500 | 1500 |
| Critical Strain, % | 0.97 | 1.1 | 0.97 | 0.86 | 0.82 | 0.77 | 0.48 |
| **Chloroform, 1 h** | | | | | | | |
| Critical Stress, psi | 5600 | 3300 | 2500 | 1700 | 1600 | 1300 | <700 |
| Critical Strain, % | 0.97 | 0.97 | 0.82 | 0.77 | 0.74 | 0.58 | <0.23 |
| **Ethyl Acetate, 24 h** | | | | | | | |
| Critical Stress, psi | 6800 | 4300 | 4100 | 2000 | 3300 | 1800 | 1000 |
| Critical Strain, % | 1.17 | 0.97 | 0.97 | 0.48 | 0.82 | 0.48 | 0.30 |

In an unexpected way, the PEEK-PPSU blends exhibited an attractive, previously undiscovered balance of properties.

Based on the experimental results, the compositions of particularly high interest for ESD applications appear to be in the range 70/30 PEEK/PPSU to 50/50 PEEK/PPSU, with the 60/40 blend being of most technical interest.

The 60/40 blend delivered surprisingly much more than average properties between PEEK and PPSU. This is especially true for environmental stress cracking resistance, as well as mechanical toughness as is evident from the data presented. Other unexpected benefits are a lower than expected (i.e. lower than weighted average) melt viscosity for the blend and a higher than expected heat deflection temperature.

### Preparation of polymer compositions according to the present invention

A first polymer composition (E1) composed of 95 parts by weight of the 60/40 PEEK/PPSU blend as above examplified, and 5 parts by weight of single wall carbon nanotubes having a number average diameter of 1 micron, is prepared by a conventional mixing method, as those previously detailed in the present specification.

The resulting polymer composition (E1) (according to the present invention) is thus composed of 57 parts by weight of PEEK, 38 parts by weight of PPSU and 5 parts by weight of the single wall carbon nanotubes.

A second polymer composition (E2) composed of 95 parts by weight of the 60/40 PEEK/PPSU blend as above examplified, and 5 parts by weight of multi wall carbon nanotubes having a number average diameter of 15 microns, is prepared by a conventional mixing method, as those previously detailed in the present specification.

The resulting polymer composition (E2) (according to the present invention) is thus composed of 57 parts by weight of PEEK, 38 parts by weight of PPSU and 5 parts by weight of the multi wall carbon nanotubes.

A third polymer composition (E3) composed of 95 parts by weight of the 60/40 PEEK/PPSU blend as above examplified, and 5 parts by weight of vapor grown carbon nanofibers having a number average diameter of 80 microns, is prepared by a conventional mixing method, as those previously detailed in the present specification.

The resulting polymer composition (E3) (according to the present invention) is thus composed of 57 parts by weight of PEEK, 38 parts by weight of PPSU and 5 parts by weight of the vapor grown carbon nanofibers.

A fourth polymer composition (E4) composed of 95 parts by weight of the 60/40 PEEK/PPSU blend as above examplified, and 5 parts by weight of vapor grown carbon fibers having a number average diameter of 150 microns, is prepared by a conventional mixing method, as those previously detailed in the present specification.

The resulting polymer composition (E4) (according to the present invention) is thus composed of 57 parts by weight of PEEK, 38 parts by weight of PPSU and 5 parts by weight of the vapor grown carbon fibers.

A fifth polymer composition (E5) composed of 95 parts by weight of the 60/40 PEEK/PPSU blend as above examplified, and 5 parts by weight of carbon nanohorns, is prepared by a conventional mixing method, as those previously detailed in the present specification.

The resulting polymer composition (E5) (according to the present invention) is thus composed of 57 parts by weight of PEEK, 38 parts by weight of PPSU and 5 parts by weight of the carbon nanohorns.

The polymer compositions (E1), (E2), (E3), (E4) and (E5) prove to be especially well suited for ESD applications, offering notably excellent protection from electrostatic discharge, notably by providing the exact degree of conductivity required for ESD protection.

### Second set of examples

A blend is compounded. This one is composed of 60 parts by weight of a polyetheretherketone homopolymer obtained by an electropihilic process (e-PEEK), namely GATONE^{®} 5600 (available from SOLVAY ADVANCED POLYMERS), and of 40 parts by weight of a copolymer (C3) essentially all, if not all, the recurring units of which are a mix of 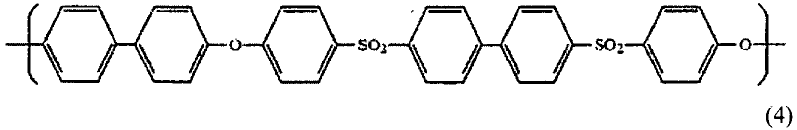 with 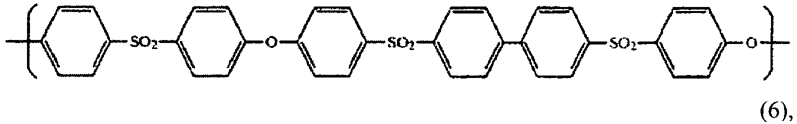 wherein the weight amount of the recurring units (6) contained in the mix, based on the total amount of the recurring units (4) and (6) of which the mix consists, is between 50 and 95 %.

To this end, the e-PEEK and the copolymer (C3) are fed to a Berstorff 25 mm co-rotating twin-screw extruder using two gravimetric feeders that are adjusted to achieve the target blend ratio of e-PEEK to the copolymer (C3).

### Preparation of polymer compositions according to the present invention

A first polymer composition (E" 1) composed of 95 parts by weight of the 60/40 e-PEEK/copolymer (C3) blend as above examplified, and 5 parts by weight of single wall carbon nanotubes having a number average diameter of 1 micron, is prepared by a conventional mixing method, as those previously detailed in the present specification.

The resulting polymer composition (E"1) (according to the present invention) is thus composed of 57 parts by weight of e-PEEK, 38 parts by weight of the copolymer (C3) and 5 parts by weight of the single wall carbon nanotubes.

A second polymer composition (E"2) composed of 95 parts by weight of the 60/40 e-PEEK/copolymer (C3) blend as above examplified, and 5 parts by weight of multi wall carbon nanotubes having a number average diameter of 15 microns, is prepared by a conventional mixing method, as those previously detailed in the present specification.

The resulting polymer composition (E"2) (according to the present invention) is thus composed of 57 parts by weight of e-PEEK, 38 parts by weight of the copolymer (C3) and 5 parts by weight of the multi wall carbon nanotubes.

A third polymer composition (E"3) composed of 95 parts by weight of the 60/40 e-PEEK/copolymer (C3) blend as above examplified, and 5 parts by weight of vapor grown carbon nanofibers having a number average diameter of 80 microns, is prepared by a conventional mixing method, as those previously detailed in the present specification.

The resulting polymer composition (E"3) (according to the present invention) is thus composed of 57 parts by weight of e-PEEK, 38 parts by weight of the copolymer (C3) and 5 parts by weight of the vapor grown carbon nanofibers.

A fourth polymer composition (E"4) composed of 95 parts by weight of the 60/40 e-PEEK/copolymer (C3) blend as above examplified, and 5 parts by weight of vapor grown carbon fibers having a number average diameter of 150 microns, is prepared by a conventional mixing method, as those previously detailed in the present specification.

The resulting polymer composition (E"4) (according to the present invention) is thus composed of 57 parts by weight of e-PEEK, 38 parts by weight of the copolymer (C3) and 5 parts by weight of the vapor grown carbon fibers.

A fifth polymer composition (E"5) composed of 95 parts by weight of the 60/40 e-PEEK/copolymer (C3) blend as above examplified, and 5 parts by weight of carbon nanohorns, is prepared by a conventional mixing method, as those previously detailed in the present specification.

The resulting polymer composition (E"5) (according to the present invention) is thus composed of 57 parts by weight of e-PEEK, 38 parts by weight of the copolymer (C3) and 5 parts by weight of the carbon nanohorns.

The polymer compositions (E"1), (E"2), (E"3), (E"4) and (E"5) prove to be especially well suited for ESD applications with a high use temperature, offering notably excellent protection from electrostatic discharge, notably by providing the exact degree of conductivity required for ESD protection.

## Claims

1. Polymer composition (C) comprising :
- at least one poly(aryl ether ketone) (P1),
- at least one poly(biphenyl ether sulfone) (P2), and
- at least one fibrous carbon nanofiller (N)
**characterized in that** the fibrous carbon nanofiller (N) is chosen from carbon nanohorns.

2. Polymer composition according to claim 1, **characterized in that** the carbon nanohorns are aggregated in aggregates having a dalhia-like shape comprising a number of horn-shaped short single-layered nanotubes sticking out in all directions.

3. Polymer composition according to claim 1 or 2, **characterized in that** the weight of the poly(aryl ether ketone) (P1), based on the total weight of the poly(aryl ether ketone) (P1) and the poly(biphenyl ether sulfone) (P2), is above 50%.

4. Polymer composition to anyone of the preceding claims, **characterized in that** the weight of the poly(aryl ether ketone) (P1), based on the total weight of the poly(aryl ether ketone) (P1) and the poly(biphenyl ether sulfone) (P2), is below 70 %.

5. Polymer composition according to anyone of the preceding claims, **characterized in that** the total weight of the poly(aryl ether ketone) (P1) and the poly(biphenyl ether sulfone) (P2), based on the total weight of the polymer composition (C), is above 92 %.

6. Polymer composition according to anyone of the preceding claims, **characterized in that** the amount of the fibrous carbon nanofiller (N), based on the total weight of the polymer composition (C), is above wt 2.0 %.

7. Polymer composition according to anyone of the preceding claims, **characterized in that** the amount of the fibrous carbon nanofiller (N), based on the total weight of the polymer composition (C), is below 8.0 %.

8. Polymer composition according to anyone of the preceding claims, **characterized in that** the poly(aryl ether ketone) (P1) is a polyetheretherketone.

9. Polymer composition according to anyone of the preceding claims, **characterized in that** the poly(biphenyl ether sulfone) (P2) is a polyphenylsulfone.

10. Shaped article or part of a shaped article comprising the polymer composition according to anyone of the preceding claims.

11. Shaped article or part of a shaped article according to claim 10, **characterized in that** it can be used in the semiconductor industry, and is chosen from cell cassettes, suitable for being used in the manufacture of semiconductors, wafer handling, test sockets, IC trays, and semiconductor assemblies.

12. Shaped article or part of a shaped article according to claim 10, **characterized in that** it can be used in the automotive field, and is chosen from fuel tubes and static paintings.

13. Shaped article or part of a shaped article according to claim 10, **characterized in that** it is chosen from hard disk drive handling components.

14. Use of at least one fibrous carbon nanofiller (N) chosen from carbon nanohorns as additive of a polymer composition (C) comprising at least one poly(aryl ether ketone) (P1) and at least one poly(biphenyl ether sulfone) (P2), to discharge electrostatic charges of said polymer composition (C).

15. Use according to claim 14, **characterized in that** the carbon nanohorns are aggregated in aggregates having a dalhia-like shape comprising a number of horn-shaped short single-layered nanotubes sticking out in all directions.

## Patentansprüche

1. Polymerzusammensetzung (C), umfassend :
- mindestens ein Poly(aryletherketon) (P1),
- mindestens ein Poly(biphenylethersulfon) (P2) und
- mindestens einen faserigen Kohlenstoff-Nanofüllstoff (N)
**dadurch gekennzeichnet, dass** der faserige Kohlenstoff Nanofüllstoff (N) aus Kohlenstoffnanohomen ausgewählt ist.

2. Polymerzusammensetzung nach Anspruch 1, **dadurch gekennzeichnet, dass** die Kohlenstoffnanohome in Aggregaten mit einer dalhiaartigen Form aggregiert werden, die eine Reihe von hornförmigen kurzen Einzelschicht-Nanoröhrchen umfassen, die in alle Richtungen abstehen.

3. Polymerzusammensetzung nach einem der Ansprüche 1 oder 2, **dadurch gekennzeichnet, dass** das Gewicht des Poly(aryletherketons) (P1) bezogen auf das Gesamtgewicht des Poly(aryletherketons) (P1) und des Poly(biphenylethersulfons) (P2) über 50 % beträgt.

4. Polymerzusammensetzung nach einem der vorhergehenden Ansprüche, **dadurch gekennzeichnet, dass** das Gewicht des Poly(aryletherketons) (P1) bezogen auf das Gesamtgewicht des Poly(aryletherketons) (P1) und des Poly(biphenylethersulfons) (P2) unter 70 % beträgt.

5. Polymerzusammensetzung nach einem der vorhergehenden Ansprüche, **dadurch gekennzeichnet, dass** das Gesamtgewicht des Poly(aryletherketons) (P1) und des Poly(biphenylethersulfons) (P2) bezogen auf das Gesamtgewicht der Polymerzusammensetzung (C) über 92 % beträgt.

6. Polymerzusammensetzung nach einem der vorhergehenden Ansprüche, **dadurch gekennzeichnet, dass** die Menge des faserigen Kohlenstoff-Nanofüllstoffs (N) bezogen auf das Gesamtgewicht der Polymerzusammensetzung (C) über 2,0 % beträgt.

7. Polymerzusammensetzung nach einem der vorhergehenden Ansprüche, **dadurch gekennzeichnet, dass** die Menge des faserigen Kohlenstoff-Nanofüllstoffs (N) bezogen auf das Gesamtgewicht der Polymerzusammensetzung (C) unter 8,0 % beträgt.

8. Polymerzusammensetzung nach einem der vorhergehenden Ansprüche, **dadurch gekennzeichnet, dass** das Poly(aryletherketon) (P1) ein Polyetheretherketon ist.

9. Polymerzusammensetzung nach einem der vorhergehenden Ansprüche, **dadurch gekennzeichnet, dass** das Poly(biphenylethersulfon) (P2) ein Polyphenylsulfon ist.

10. Formkörper oder Teil eines Formkörpers, umfassend die Polymerzusammensetzung nach einem der vorhergehenden Ansprüche.

11. Formkörper oder Teil eines Formkörpers nach Anspruch 10, **dadurch gekennzeichnet, dass** dieser in der Halbleiterindustrie verwendet werden kann und ausgewählt ist aus Zellkassetten, die für die Verwendung bei der Herstellung von Halbleitern, der Waferbehandlung, Messbuchsen, integrierten Schaltungsträgern und Halbleiteranordnungen geeignet sind.

12. Formkörper oder Teil eines Formkörpers nach Anspruch 10, **dadurch gekennzeichnet, dass** dieser in der Automobilbranche verwendet werden kann und ausgewählt ist aus Kraftstoffleitunngen und statischen Lacken.

13. Formkörper oder Teil eines Formkörpers nach Anspruch 10, **dadurch gekennzeichnet, dass** dieser aus Festplattenlaufwerkskomponenten ausgewählt ist.

14. Verwendung mindestens eines faserigen Kohlenstoff-Nanofüllstoffes (N), der ausgewählt ist aus Kohlenstoffnanohomen als Additiv einer Polymerzusammensetzung (C), umfassend mindestens ein Poly(aryletherketon) (P1) und mindestens ein Poly(biphenylethersulfon) (P2) zum Entladen von elektrostatischen Ladungen der Polymerzusammensetzung (C).

15. Verwendung nach Anspruch 14, **dadurch gekennzeichnet, dass** die Kohlenstoffnanohome in Aggregaten mit einer dalhiaartigen Form aggregiert werden, die eine Reihe von hornförmigen kurzen Einzelschicht-Nanoröhrchen umfassen, die in alle Richtungen abstehen.

## Revendications

1. Composition polymère (C), comprenant :
- au moins un poly(aryle éther cétone) (P1),
- au moins un poly(biphényle éther sulfone) (P2), et
- au moins une nanocharge de carbone fibreux (N),
**caractérisée en ce que** la nanocharge de carbone fibreux (N) est choisie parmi des nanocornets de carbone.

2. Composition polymère selon la revendication 1, **caractérisée en ce que** les nanocornets de carbone sont agrégés en agrégats en forme de dahlia comprenant un nombre de nanotubes monocouches courts en forme de cornet jaillissant dans toutes les directions.

3. Composition polymère selon la revendication 1 ou 2, **caractérisée en ce que** le poids du poly(aryle éther cétone) (P1), basé sur le poids total du poly(aryle éther cétone) (P1) et du poly(biphényle éther sulfone) (P2), est supérieur à 50 %.

4. Composition polymère selon l'une quelconque des revendications précédentes, **caractérisée en ce que** le poids du poly(aryle éther cétone) (P1), basé sur le poids total du poly(aryle éther cétone) (P1) et du poly(biphényle éther sulfone) (P2), est supérieur à 70 %.

5. Composition polymère selon l'une quelconque des revendications précédentes, **caractérisée en ce que** le poids du poly(aryle éther cétone) (P1), et du poly(biphényle éther sulfone) (P2) basé sur le poids total de la composition polymère (C), est supérieur à 92 %.

6. Composition polymère selon l'une quelconque des revendications précédentes, **caractérisée en ce que** la quantité de nanocharge de carbone fibreux (N), basée sur le poids total de la composition polymère (C), est supérieure à 2,0 % en poids.

7. Composition polymère selon l'une quelconque des revendications précédentes, **caractérisée en ce que** la quantité de nanocharge de carbone fibreux (N), basée sur le poids total de la composition polymère (C), est inférieure à 8,0 %.

8. Composition polymère selon l'une quelconque des revendications précédentes, **caractérisée en ce que** le poly(aryle éther cétone) (P1) est un polyétheréthercétone.

9. Composition polymère selon l'une quelconque des revendications précédentes, **caractérisée en ce que** le poly(biphényle éther sulfone) (P2) est un polyphénylsulfone.

10. Article façonné ou partie d'un article façonné comprenant la composition polymère selon l'une quelconque des revendications précédentes.

11. Article façonné ou partie d'un article façonné selon la revendication 10, caractérisé(e) en ce qu'il/elle peut être utilisé(e) dans l'industrie des semi-conducteurs, et est choisi(e) parmi des cassettes de cellule, convenant pour être utilisé(e) dans la fabrication de semi-conducteurs, la manipulation de galettes, des douilles de test, des cartes de circuits imprimés et des ensembles semi-conducteurs.

12. Article façonné ou partie d'un article façonné selon la revendication 10, caractérisé(e) en ce qu'il/elle peut être utilisé(e) dans le domaine automobile, et est choisie parmi des tubes de combustible et des peintures statiques.

13. Article façonné ou partie d'un article façonné selon la revendication 10, caractérisé(e) en ce qu'il/elle est choisi(e) parmi des composants de manipulation de lecteur de disque dur.

14. Utilisation d'au moins une nanocharge de carbone fibreux (N) choisie parmi des nanocornets de carbone en tant qu'additif à une composition polymère (C), comprenant au moins un poly(aryle éther cétone) (P1) et au moins un poly(biphényle éther sulfone) (P2), pour décharger des charges électrostatiques de ladite composition polymère (C).

15. Utilisation selon la revendication 14, **caractérisée en ce que** les nanocornets de carbone sont agrégés en agrégats en forme de dahlia comprenant un nombre de nanotubes monocouches courts en forme de cornet jaillissant dans toutes les directions.
